(19) Europäisches Patentamt
European Patent Office
Office européen des brevets

(11) **EP 4 567 379 A2**

(12) **EUROPEAN PATENT APPLICATION**

(43) Date of publication:
**11.06.2025 Bulletin 2025/24**

(21) Application number: **24213127.4**

(22) Date of filing: **14.11.2024**

(51) International Patent Classification (IPC):
**G01C 19/5776** (2012.01)

(52) Cooperative Patent Classification (CPC):
**G01C 19/5776**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.11.2023 US 202363599823 P**

(71) Applicant: **Analog Devices, Inc.**
**Wilmington, MA 01887 (US)**

(72) Inventors:
• **Dunn, Tyler**
**Wilmington, 01887 (US)**
• **Vohra, Gaurav**
**Wilmington, 01887 (US)**
• **Clark, William**
**Wilmington, 01887 (US)**
• **Zhang, Xin**
**Wilmington, 01887 (US)**
• **Merritt, Carey**
**Wilmington, 01887 (US)**

(74) Representative: **Horler, Philip John**
**Withers & Rogers LLP**
**2 London Bridge**
**London SE1 9RA (GB)**

(54) **GYROSCOPES WITH ELECTRODES FOR TUNING CROSS-AXIS SENSITIVITY**

(57) Gyroscopes with electrodes for tuning cross-axis sensitivity are disclosed. In certain embodiments, a MEMS gyroscope includes a resonator mass that moves in a first direction (for instance, x-direction), a sensing structure that detects a Coriolis effect in a second direction (for instance, y-direction), and a plurality of electrodes that control a cross-axis stiffness of the MEMS gyroscope by controlling motion of the resonator mass in a third direction (for instance, z-direction). For example, the electrodes can be used to reduce or eliminate cross-axis sensitivity arising from cross-axis stiffnesses, such as $k_{xz}$ (resonator-to-orthogonal) and/or $k_{yz}$ (Coriolis-to-orthogonal).

FIG. 3A

**Description**

**Field of the Disclosure**

Embodiments of the invention relate to electronics, and more particularly to microelectromechanical systems (MEMS) gyroscopes.

BACKGROUND

Gyroscopes are used for measuring angular rate by way of Coriolis acceleration. MEMS gyroscopes provide a compact form factor for enabling precision angular rate and/or rotation speed measurement even in the presence of shock and vibration. Example applications for gyroscopes include, but are not limited to, inertial sensing and navigation.

SUMMARY OF THE DISCLOSURE

Gyroscopes with electrodes for tuning cross-axis sensitivity are disclosed. In certain embodiments, a MEMS gyroscope includes a resonator mass that moves in a first direction (for instance, x-direction), a sensing structure that detects a Coriolis effect in a second direction (for instance, y-direction), and a plurality of electrodes that control a cross-axis stiffness of the MEMS gyroscope by controlling motion of the resonator mass in a third direction (for instance, z-direction). For example, the electrodes can be used to reduce or eliminate cross-axis sensitivity arising from cross-axis stiffnesses, such as $k_{xz}$ (resonator-to-orthogonal) and/or $k_{yz}$ (Coriolis-to-orthogonal).

In one aspect, a microelectromechanical systems (MEMS) gyroscope includes a resonator mass configured to move in a first direction, a sensing structure configured to detect a Coriolis effect on the resonator mass in a second direction, and a plurality of electrodes configured to control a cross-axis stiffness of the MEMS gyroscope by controlling a motion of the resonator mass in a third direction. The first direction, the second direction, and the third direction are orthogonal to one another.

In another aspect, a method of tuning cross-axis sensitivity in a MEMS gyroscope is disclosed. The method includes moving a resonator mass in a first direction, detecting a Coriolis effect on the resonator mass in a second direction using a sensing structure, and controlling a cross-axis stiffness of the MEMS gyroscope by controlling a motion of the resonator mass in a third direction using a plurality of electrodes. The first direction, the second direction, and the third direction are orthogonal to one another.

BRIEF DESCRIPTION OF THE DRAWINGS

Figure 1 is a schematic diagram of one embodiment of a MEMS gyroscope.
Figure 2A is a schematic diagram of another embodiment of a MEMS gyroscope.
Figure 2B is a schematic diagram of another embodiment of a MEMS gyroscope.
Figure 3A is a schematic diagram of another embodiment of a MEMS gyroscope.
Figure 3B is a schematic diagram of another embodiment of a MEMS gyroscope.
Figure 3C is a schematic diagram of another embodiment of a MEMS gyroscope.
Figure 3D is a schematic diagram of another embodiment of a MEMS gyroscope.
Figure 3E is a schematic diagram of another embodiment of a MEMS gyroscope.
Figure 4A is a schematic diagram of one embodiment of an x-axis sidewall for a MEMS gyroscope.
Figure 4B is a schematic diagram of the x-axis sidewall of Figure 4A in response to x-axis motion.
Figure 4C is a schematic diagram depicting z-axis reactive motion due to x-axis motion.
Figure 5A is a schematic diagram of one embodiment of a y-axis sidewall for a MEMS gyroscope.
Figure 5B is a schematic diagram of the y-axis sidewall of Figure 5A in response to z-axis motion.
Figure 5C is a schematic diagram depicting y-axis reactive motion due to z-axis motion.
Figure 6 is a schematic diagram of another embodiment of a MEMS gyroscope.
Figure 7 is a schematic diagram of one embodiment of a cross-axis sensitivity tuning circuit for a MEMS gyroscope.

DETAILED DESCRIPTION OF EMBODIMENTS

The following detailed description of embodiments presents various descriptions of specific embodiments of the invention. However, the invention can be embodied in a multitude of different ways. In this description, reference is made to the drawings where like reference numerals may indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings.

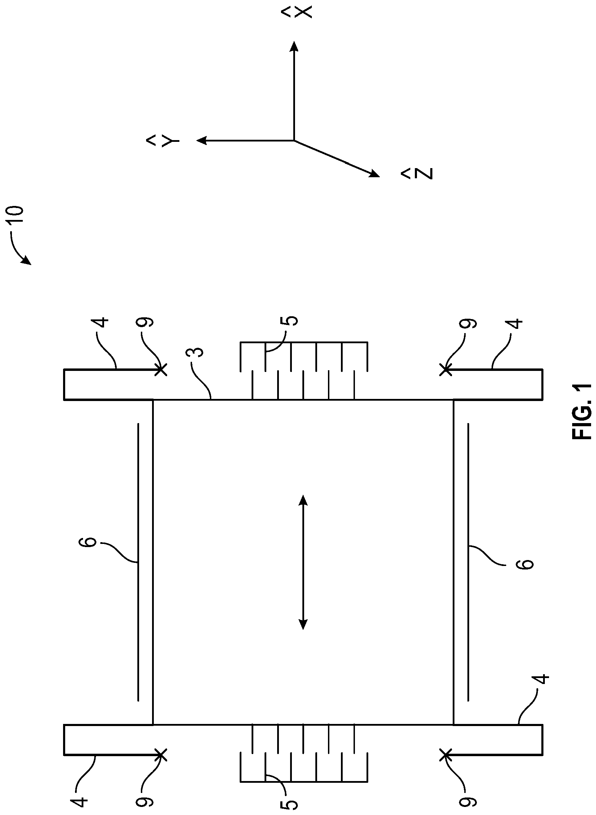

Figure 1 is a schematic diagram of one embodiment of a MEMS gyroscope 10. The MEMS gyroscope 10 includes a resonator mass 3, springs 4, x-axis electrodes 5, y-axis electrodes 6, and anchors 9.

In the illustrated embodiment, the springs 4 couple the resonator mass 3 to the anchors 9. Furthermore, the anchors 9 are connected to a frame or substrate (not shown in Figure 1) at each of four corners, in this example.

With continuing reference to Figure 1, the resonator mass 3 is driven in the x-direction. Additionally, in response to a rotation about the z-axis, the resonator mass 3 can experience movement in the y-direction arising from the Coriolis effect. Thus, in this embodiment, the resonator mass 3 moves in the in the x-direction, the Coriolis effect deflects the resonator mass 3 in the y-direction, and no motion of the resonator mass 3 is desired in the z-direction.

As the rate of rotation increases, so does the displacement of the resonator mass 3 in the y-direction arising from the Coriolis effect. The motion of the resonator mass 3 in the x-direction is sensed through the x-axis electrodes 5, which serve as capacitive sensing elements. In certain implementations, the sense electrodes 5 include stationary silicon beams that are each interdigitated with moving silicon beams attached to the resonator mass 3. Additionally, the MEMS gyroscope 10 includes y-axis electrodes 6, which can be used to measure y-axis deflection arising from the Coriolis effect and/or to trim motion of the resonator mass 3 in the y-direction (for instance, a quadrature trim).

With continuing reference to Figure 1, displacement due to angular rate induces a change in capacitance used generate an output signal of the gyroscope. The microelectromechanical gyroscope 10 can be placed as desired on a rotating object, with the sensing axis placed parallel to the axis of rotation. Thus, the microelectromechanical gyroscope 10 can be deployed in a wide range of applications to measure one or more angular rotation rates including roll, pitch, and/or yaw.

A MEMS gyroscope, such as the MEMS gyroscope 10 of Figure 1, can exhibit undesirable cross-axis sensitivity. For example, a MEMS gyroscope can have a sensitivity matrix S as defined by Equation 1 below.

## Equation 1

$$S = \begin{pmatrix} S_{XX} & S_{XY} & S_{XZ} \\ S_{YX} & S_{YY} & S_{YZ} \\ S_{ZX} & S_{ZY} & S_{ZZ} \end{pmatrix}$$

In Equation 1, diagonal terms $S_{ii}$ can correspond to the desired response (depending on implementation as a roll, pitch, and/or yaw sensor) and off-diagonal terms $S_{ij}$ represent undesired cross-axis sensitivity.

Cross-axis sensitivity can arise from a variety of sources including, for example, a combination of misalignment of the sensor axes relative to sensor packaging (for example a sensor soldered with slight rotation) and/or inherent non-orthogonality in the sensor response. Reducing or minimizing cross-axis sensitivity error is a key requirement in certain applications, including those associated with high performance inertial sensing and/or navigation. Although cross-axis sensitivity can be reduced through careful calibration, it will nevertheless vary over temperature, humidity, stress, and/or other operating parameters.

As one example, Table 1 below provides four example sets of displacement, rate, force, and sensitivity parameters for the microelectromechanical gyroscope 10 of Figure 1.

**Table 1**

| Displacement | Rate | Force | Sensitivity |
|---|---|---|---|
| $x_{res}\hat{x}$ | $\Omega_z\hat{z}$ | $\hat{y}$ | $S_{zz} \propto x_{res}\dfrac{\partial C_{cor}}{\partial y}$ |
| $x_{res}\hat{x}$ | $\Omega_y\hat{y}$ | $\hat{z}$ | $S_{zy} \propto x_{res}(\dfrac{\partial C_{cor}}{\partial z} + k_{yz}\dfrac{\partial C_{cor}}{\partial y})$ |
| $k_{xy}x_{res}\hat{y}$ | $\Omega_x\hat{x}$ | $\hat{z}$ | $S_{zx} \propto k_{xy}x_{res}(\dfrac{\partial C_{cor}}{\partial z} + k_{yz}\dfrac{\partial C_{cor}}{\partial y})$ |

(continued)

| Displacement | Rate | Force | Sensitivity |
|---|---|---|---|
| $k_{xz}x_{res}\hat{z}$ | $\Omega_x\hat{x}$ | $\hat{y}$ | $S_{zx} \propto k_{xz}x_{res}\dfrac{\partial C_{cor}}{\partial y}$ |

In Table 1, $S_{zz}$ corresponds to the intended sensitivity of the MEMS gyroscope 10. For example, the resonator mass 3 experiences a force $\hat{y}$ in the y-direction when the MEMS gyroscope 10 has a displacement $x_{res}\hat{x}$ in the x-direction and rotates about the z-axis with rate $\Omega_z\hat{z}$. Additionally, the y-axis electrodes 6 detect a change in a capacitance $C_{cor}$ corresponding to an amount of deflection of the resonator mass 3 in the y-direction in response to the force $\hat{y}$.

In addition to the intended sensitivity, Table 1 also includes various undesired cross-axis sensitivities. For example, $S_{zy}$ arises from x-axis motion of the resonator mass 3 in combination with cross-axis stiffness $k_{yz}$ (Coriolis-to-orthogonal) and/or sense misalignment ($\dfrac{\partial C_{cor}}{\partial z}$ and/or $\dfrac{\partial C_{cor}}{\partial y}$). Undesired cross-axis sensitivity can also arise from cross-axis stiffnesses $k_{xz}$ (resonator-to-orthogonal) and/or $k_{xy}$ (resonator-to-Coriolis).

In certain implementations, $k_{xy}$ (resonator-to-Coriolis) can be nulled with a quadrature loop over desired operating conditions to provide a quadrature trim. However, even in such implementations, cross-axis sensitivity errors arising from can $k_{xz}$ (resonator-to-orthogonal) and/or $k_{yz}$ (Coriolis-to-orthogonal) remain.

Gyroscopes with electrodes for tuning cross-axis sensitivity are disclosed. In certain embodiments, a MEMS gyroscope includes a resonator mass that moves in a first direction (for instance, x-direction), a sensing structure that detects a Coriolis effect in a second direction (for instance, y-direction), and a plurality of electrodes that control a cross-axis stiffness of the MEMS gyroscope by controlling motion of the resonator mass in a third direction (for instance, z-direction). For example, the electrodes can be used to reduce or eliminate cross-axis sensitivity arising from cross-axis stiffnesses, such as $k_{xz}$ (resonator-to-orthogonal) and/or $k_{yz}$ (Coriolis-to-orthogonal).

Accordingly, the teachings herein can be used to measure and compensate for cross-axis sensitivity using electrodes.

In contrast to quadrature trim electrodes that control $k_{xy}$ (resonator-to-Coriolis), the electrodes herein are oriented in orthogonal directions to control motion in the z-direction.

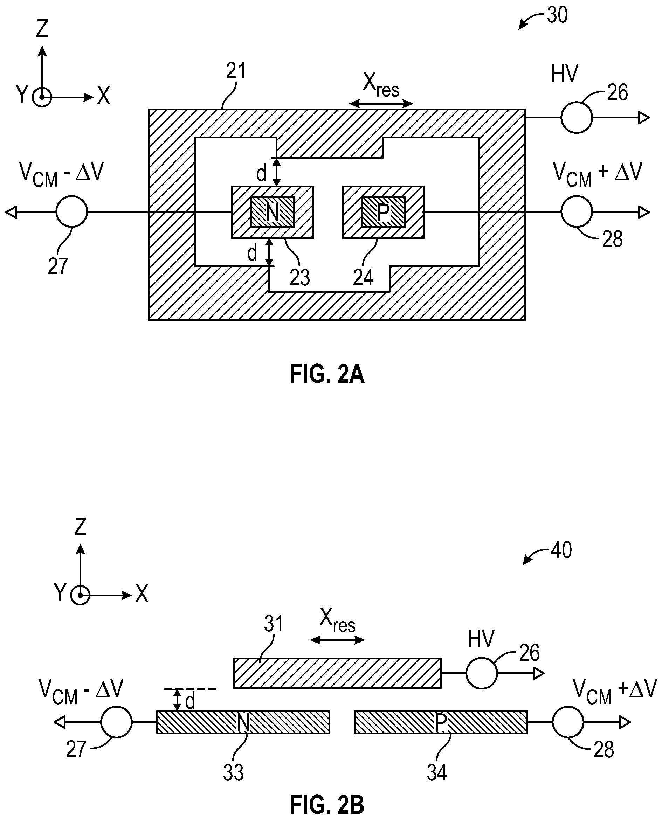

Figure 2A is a schematic diagram of another embodiment of a MEMS gyroscope 30. The MEMS gyroscope 30 includes a resonator mass 21 and a pair of electrodes 23/24 for cross-axis sensitivity tuning. The resonator mass 21 is driven to move in the x-direction, the Coriolis effect occurs in the y-direction, and no motion of the resonator mass 21 is desired in the z-direction. For clarity of the figure, various structures of the MEMS gyroscope 30 such as sensing structures for detecting movement in the x-direction and the y-direction are not shown.

As shown in Figure 2A, a resonator mass voltage source 26 biases the voltage of the resonator mass 21 at a voltage HV. Additionally, a first electrode voltage source 27 biases the first electrode 23 with a voltage $V_{CM}$ - ΔV, while a second electrode voltage source 28 biases the second electrode 24 with a voltage $V_{CM}$ + ΔV. Thus, the pair of electrodes 23/24 operate with a common-mode voltage $V_{CM}$ and a voltage difference 2*ΔV. The voltage difference 2*ΔV is also referred to herein as a differential voltage.

In the illustrated embodiment, the pair of electrodes 23/24 have a width w in the x-direction and a thickness h in the y-direction. Additionally, the resonator mass 21 surrounds the pair of electrodes 23/24 in an air cavity, and is separated from both the tops and bottoms of the pair of electrodes 23/24 by a distance d.

The pair of electrodes 23/24 operate to provide a force $F_z$ in the z-direction, which can be used to null displacement in the z-direction arising from cross-axis stiffness and motion of the resonator mass 21 in the x-direction. Accordingly, the pair of electrodes 23/24 can be used to null cross-axis sensitivity arising from cross-axis stiffnesses such as $k_{xz}$ (resonator-to-orthogonal).

In certain implementations, the pair of electrodes 23/24 operate to generate a force $F_z$ given by Equation 2 below, where $\varepsilon_0$ is the permittivity of free space and z is the amount of displacement in the z-direction.

## Equation 2

$$F_z = \frac{4\epsilon_0 h}{d^2}(HV - V_{cm})\Delta V x_{res} - \frac{4\epsilon_0 wh}{d^3}(HV - V_{cm})^2 z$$

In Equation 2, the first term ($\frac{4\epsilon_0 h}{d^2}(HV - V_{cm})\Delta V$) can be used to provide cross-axis stiffness tuning. For example, the z-direction force $F_z$ can be controlled by the applied voltage difference $\Delta V$ to the pair of electrodes 23/24.

Furthermore, the second term ( $\frac{4\epsilon_0 wh}{d^3}(HV - V_{cm})^2$ ) can be used to provide frequency tuning of an orthogonal mode.

Figure 2B is a schematic diagram of another embodiment of a MEMS gyroscope 40. The MEMS gyroscope 40 includes a resonator mass 31 and a pair of electrodes 33/34 for cross-axis sensitivity tuning. The resonator mass 21 is driven to move in the x-direction, the Coriolis effect occurs in the y-direction, and no motion of the resonator mass 21 is desired in the z-direction. For clarity of the figure, various structures of the MEMS gyroscope 40 such as sensing structures for detecting movement in the x-direction and the y-direction are not shown.

The MEMS gyroscope 40 of Figure 2B is similar to the MEMS gyroscope 30 of Figure 2A, except that the MEMS gyroscope 40 of Figure 2B is implemented with electrodes 33/34 positioned below the resonator mass 31 rather than being surrounded by the resonator mass as in Figure 2A. In the embodiment of Figure 2B, the pair of electrodes 33/34 have a width w in the x-direction and a length L in the y-direction, and are separated from the resonator mass 31 by a distance d.

In certain implementations, the pair of electrodes 33/34 operate to generate a force $F_z$ in the z-direction given by Equation 3 below.

## Equation 3

$$F_z = \frac{2\epsilon_0 L}{d^2}(HV - V_{cm})\Delta V x_{res} - \frac{2\epsilon_0 wL}{d^3}(HV - V_{cm})^2 z$$

In Equation 3, the first term ( $\frac{2\epsilon_0 L}{d^2}(HV - V_{cm})\Delta V$ ) can be used to provide cross-axis stiffness tuning, for instance, by controlling the applied voltage difference $\Delta V$ to the pair of electrodes 33/34. Furthermore, the second term ( $\frac{2\epsilon_0 wL}{d^3}(HV - V_{cm})^2$ ) can be used to provide frequency tuning of an orthogonal mode.

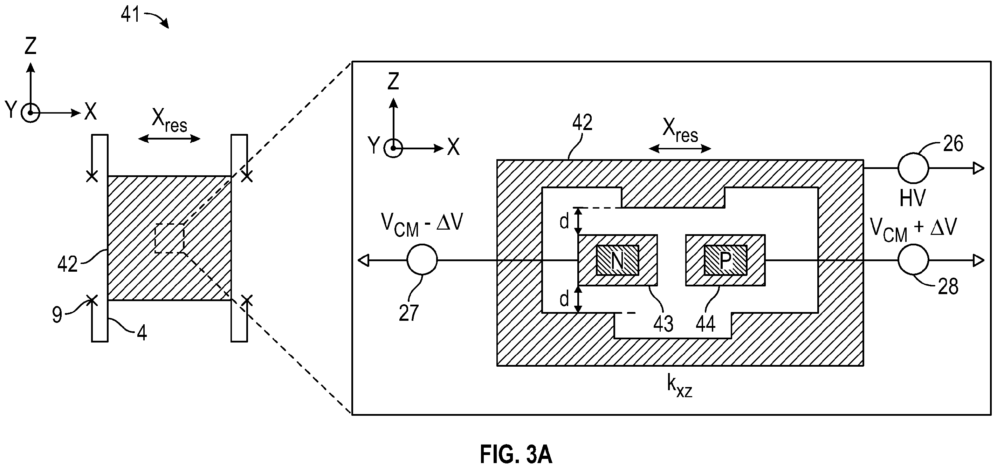

Figure 3A is a schematic diagram of another embodiment of a MEMS gyroscope 41. The MEMS gyroscope 41 includes a resonator mass 42, springs 4, anchors 9, and electrodes 43/44 separated from the resonator mass 42 by a distance d. The resonator mass 42 has resonator displacement in the x-direction and Coriolis displacement in the y-direction. In Figure 3A, top views of the resonator mass 42 and electrodes 43/44 are depicted. For clarity of the figure, various structures of the MEMS gyroscope 41 such as sensing structures for detecting movement of the resonator mass 42 are not shown.

The pair of electrodes 43/44 operate to null cross-axis sensitivity arising from cross-axis stiffnesses $k_{xz}$. The pair of electrodes 43/44 are in-plane with the resonator mass 42, in this embodiment.

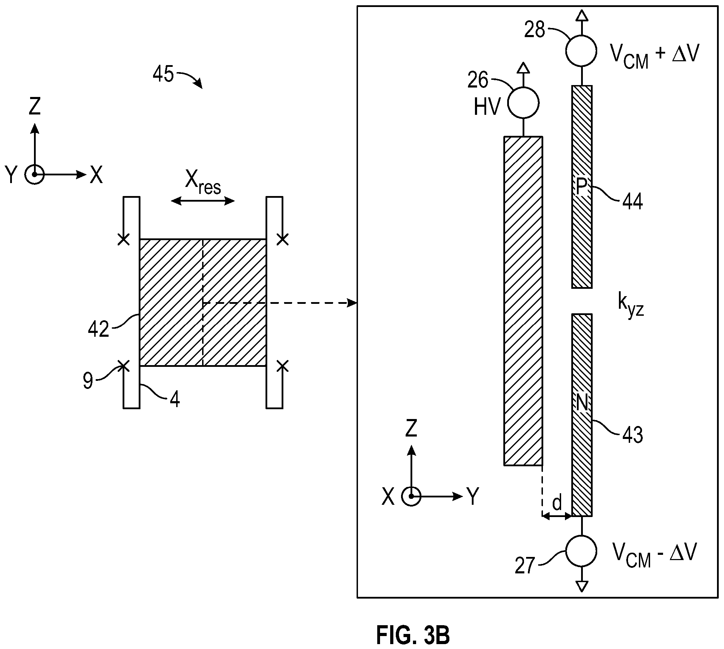

Figure 3B is a schematic diagram of another embodiment of a MEMS gyroscope 45. The MEMS gyroscope 45 includes a resonator mass 42 that moves in the x-direction, springs 4, anchors 9, and electrodes 43/44 separated from the resonator mass 42 by a distance d. In Figure 3B, both a top view (depicted at left) and a cross-section (depicted at right) of the MEMS gyroscope 45 are shown.

In comparison to the MEMS gyroscope 41 of Figure 3A, the MEMS gyroscope 45 of Figure 3B uses the pair of electrodes 43/44 to null cross-axis sensitivity arising from cross-axis stiffnesses $k_{yz}$. The pair of electrodes 43/44 are out-of-plane with the resonator mass 42, in this embodiment.

With reference to Figures 3A and 3B, depending on the resonator and Coriolis directions, different combinations of electrodes for nulling cross-axis stiffnesses $k_{yz}$ and/or $k_{yz}$ can be included. Further, any of the embodiments herein can include another pair of electrodes for quadrature trimming ($k_{xy}$). The configuration of the electrodes can be selected depending on application, including, for example, based on if the MEMS gyroscope detects roll, pitch, and/or yaw.

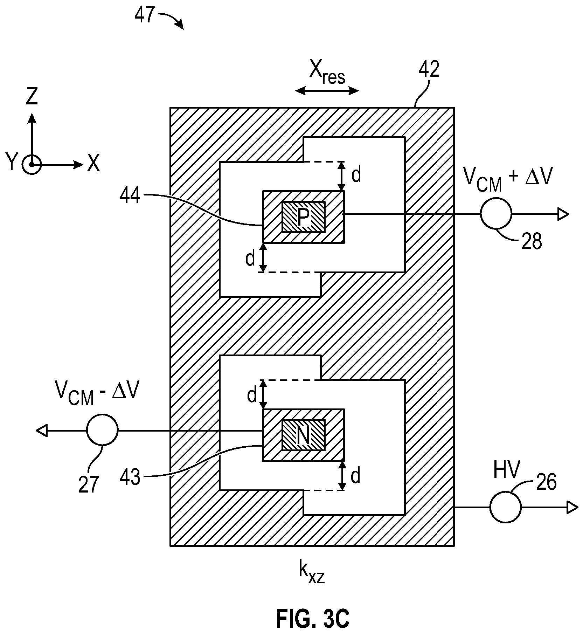

Figure 3C is a schematic diagram of another embodiment of a MEMS gyroscope 47. The MEMS gyroscope 47 includes a resonator mass 42 that moves in the x-direction and electrodes 43/44 separated from the resonator mass 42 by a distance d.

In Figure 3C, the pair of electrodes 43/44 operate to null cross-axis sensitivity arising from cross-axis stiffnesses $k_{xz}$. Thus, the MEMS gyroscope 47 of Figure 3C depicts another embodiment of $k_{xz}$ nulling. In comparison to the MEMS gyroscope 41 of Figure 3A in which electrodes are aligned along the x-direction, the electrodes 43/44 of Figure 3C are aligned along the y-direction. Further, a portion of the resonator mass 42 is placed between the electrodes 43/44 in the embodiment of Figure 3C.

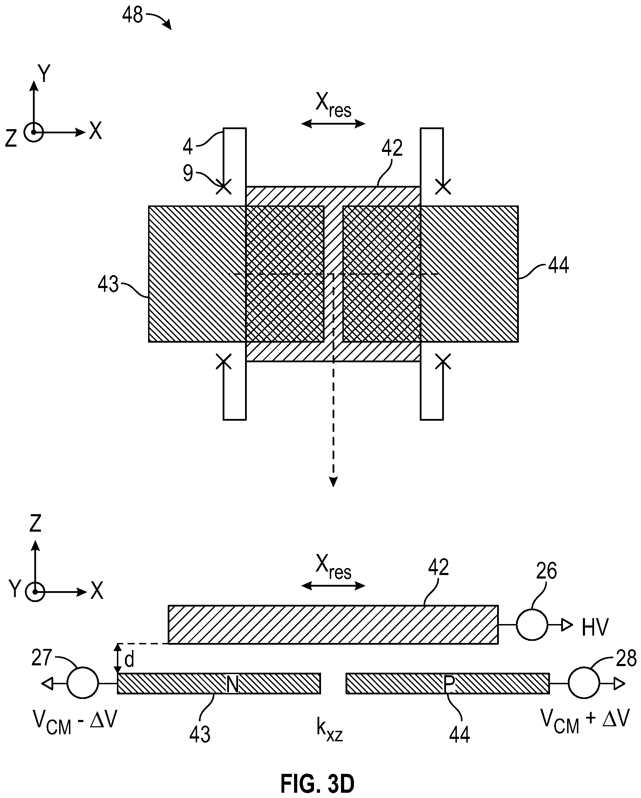

Figure 3D is a schematic diagram of another embodiment of a MEMS gyroscope 48. The MEMS gyroscope 48 includes a resonator mass 42, springs 4, anchors 9, and electrodes 43/44 separated from the resonator mass 42 by a distance d. The resonator mass 42 has resonator displacement in the x-direction and Coriolis displacement in the y-direction. For clarity of the figure, various structures of the MEMS gyroscope 48 such as sensing structures for detecting movement of the resonator mass 42 are not shown. In Figure 3D, both a top view (depicted at top) and a cross-section (depicted at bottom) of the MEMS gyroscope 48 are shown.

The MEMS gyroscope 48 of Figure 3D depicts another implementation of the electrodes 43/44 for $k_{xz}$ nulling. In this example, the electrodes 43/44 are out-of-plane.

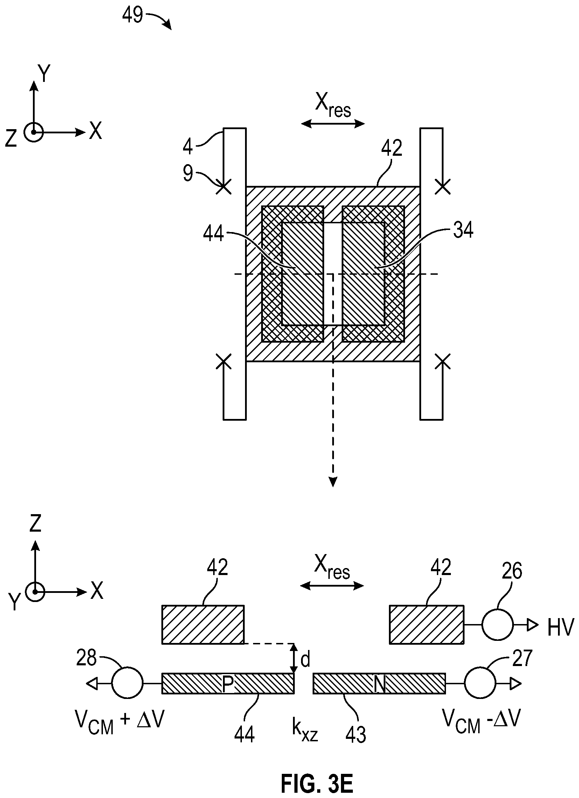

Figure 3E is a schematic diagram of another embodiment of a MEMS gyroscope 49. The MEMS gyroscope 49 includes a resonator mass 42, springs 4, anchors 9, and electrodes 43/44 separated by the resonator mass 42 by a distance d.

Similar to the MEMS gyroscope 48 of Figure 3D, the MEMS gyroscope 49 of Figure 3E also uses the electrodes 43/44 for $k_{xz}$ nulling. In this implementation, the resonator mass 42 includes an opening in the center that partially overlaps the electrodes 43/44.

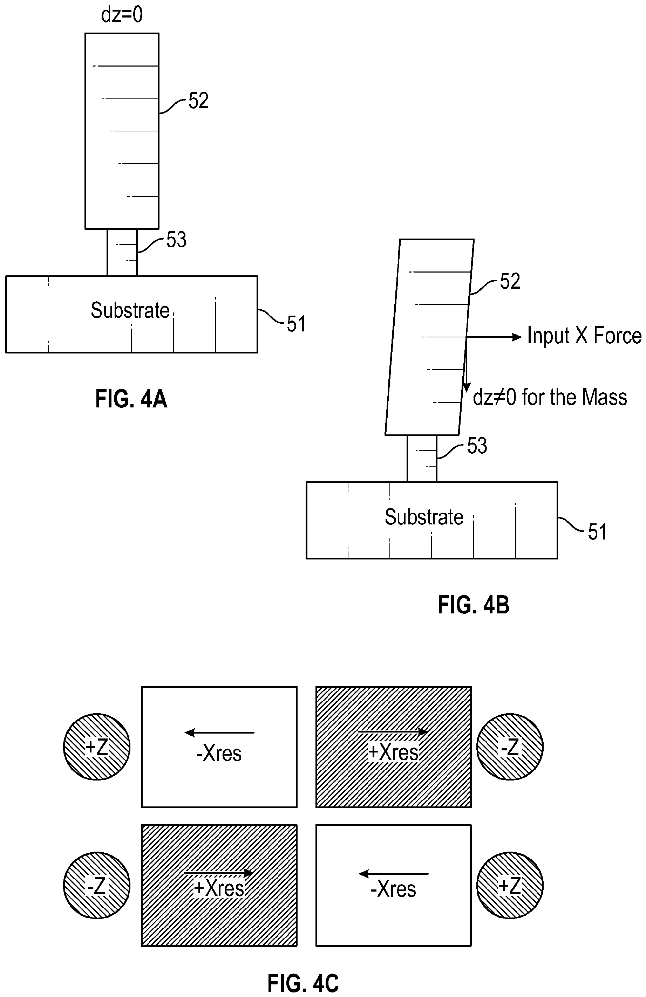

Figure 4A is a schematic diagram of one embodiment of an x-axis sidewall 52 for a MEMS gyroscope. The x-axis sidewall 52 is attached to a substrate 51 by a support 53. Figure 4B is a schematic diagram of the x-axis sidewall 52 of Figure 4A in response to x-axis motion of a resonator mass. Figure 4C is a schematic diagram depicting z-axis reactive motion due to x-axis motion.

With reference to Figures 4A-4C, when no motion of the resonator mass in the x-direction is occurring, there is no z-axis motion (dz=0) of the resonator mass. However, as an input force X along the x-axis occurs, the x-axis motion is translated to z-axis motion (dz≠0).

For example, Figure 4C, depicts z-axis reactive motion across four quadrants due to x-axis motion.

Accordingly, x-axis motion of a resonator mass translates to z-axis motion.

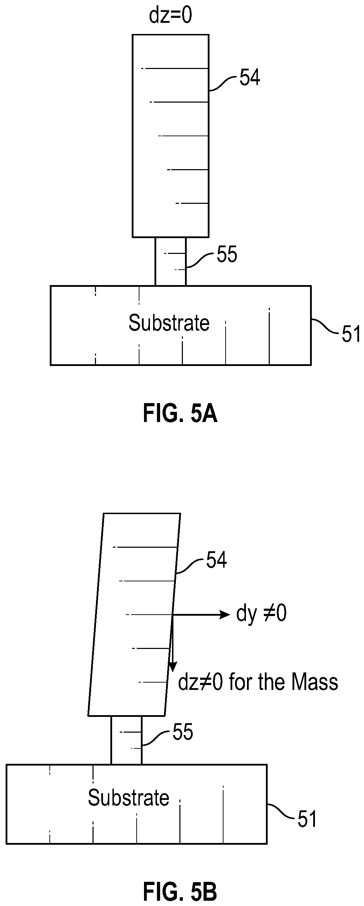

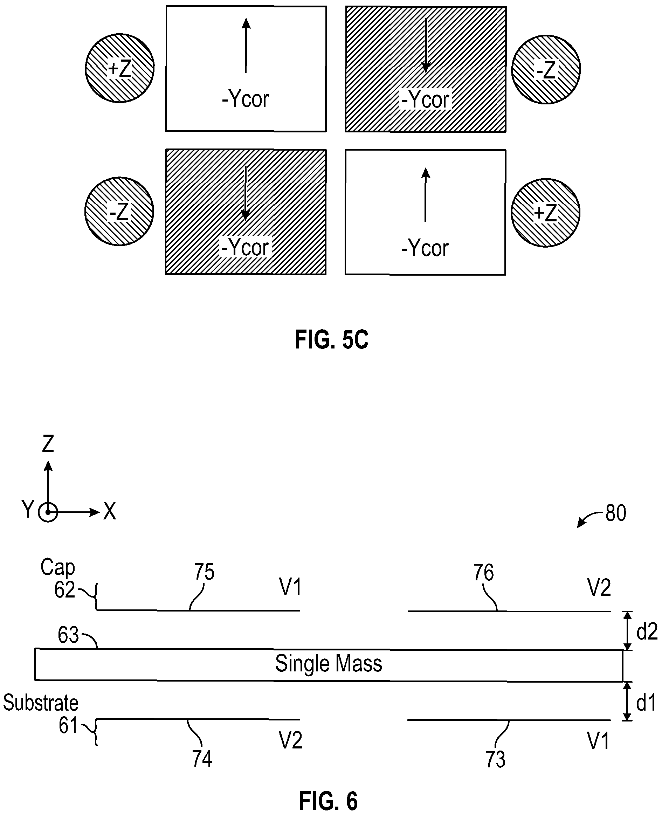

Figure 5A is a schematic diagram of one embodiment of a y-axis sidewall 54 for a MEMS gyroscope. The y-axis sidewall 54 is attached to a substrate 51 by a support 55. Figure 5B is a schematic diagram of the y-axis sidewall 54 of Figure 5A in response to z-axis motion of a resonator mass. Figure 5C is a schematic diagram depicting y-axis reactive motion due to z-axis motion.

In the illustrated embodiment, when no motion of the resonator mass in the z-direction is occurring, there is no y-axis motion (dy=0) of the resonator mass. However, as motion along the z-axis occurs, the z-axis motion is translated to y-axis motion (dy≠0).

With reference to Figures 4A-5C, x-axis motion of a resonator mass translates to z-axis motion, which in turn translates to y-axis motion. Thus, a resonator mode ( $\frac{1}{s^2+jw_x s+w_x^2}$ ) translates to an out-of-plane (OOP) mode ( $\frac{1}{s^2+jw_z s+w_z^2}$ ), which in turn translates to a Coriolis mode ( $\frac{1}{s^2+jw_y s+w_y^2}$ ).

By including one or more pairs of electrodes in accordance with the teachings herein, z-axis motion can be cancelled. Thus, dz can be controlled to be 0 even as the resonator mass moves in the x-direction during operation of the MEMS gyroscope.

Figure 6 is a schematic diagram of another embodiment of a MEMS gyroscope 80. The MEMS gyroscope 80 includes a substrate 61, a cap 62, a resonator mass 63, a first pair of electrodes 73/74 for cross-axis sensitivity tuning, and a second pair of electrodes 75/76 for cross-axis sensitivity tuning. During operation of the MEMS gyroscope 80, the resonator mass 63 moves in the in the x-direction, the Coriolis effect occurs in the y-direction, and no motion of the resonator mass 63 is desired in the z-direction. For clarity of the figure, various structures of the MEMS gyroscope 80 such as sensing structures for detecting movement in the x-direction and the y-direction are not shown.

In the illustrated embodiment, multiple pairs of electrodes are included for z-axis motion correction. For example, the MEMS gyroscope 80 includes a first pair of electrodes 73/74 formed in a polysilicon layer over the substrate 61, and a second pair of electrodes 75/76 formed in the cap 62 over the resonator mass 63. The depicted electrodes can be patterned such that z-axis forces are equal from top and bottom.

In this example, the first electrodes (73 and 75) of each pair receive a first voltage V1 = $V_{CM}$ - ΔV, while the second electrodes (74 and 76) of each pair receive a second voltage V2 = $V_{CM}$ + ΔV.

In this embodiment, the differential voltage 2*ΔV can be controlled to cancel motion in the z-direction.

For implementations in which only one pair of electrodes are included (for example, only the first pair of electrodes 73/74), one way common-mode force is applied so efficacy is only half as compared to both top and bottom electrodes as depicted.

In the illustrated embodiment, the common-mode voltage $V_{CM}$ operates to provide an adjustment to the resonator frequency, which can be used to avoid higher order harmonic overlap over temperature.

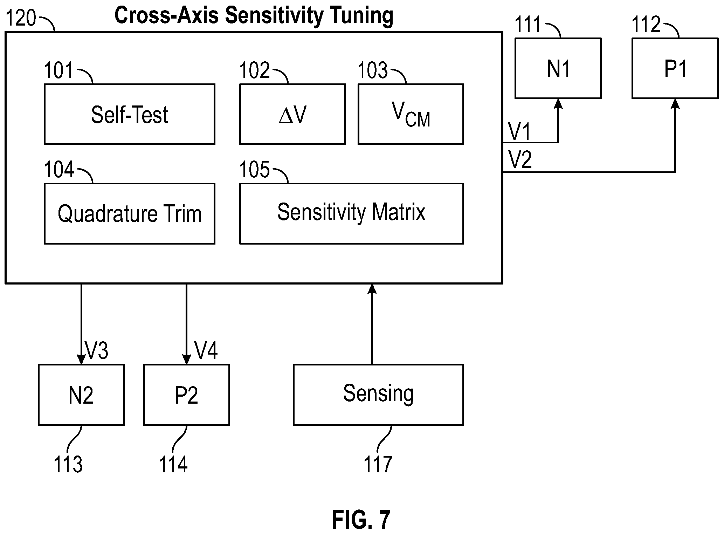

Figure 7 is a schematic diagram of one embodiment of a cross-axis sensitivity tuning circuit 120 for a MEMS gyroscope. The cross-axis sensitivity tuning circuit 120 includes a self-test circuit 101, a differential voltage control circuit 102, a common-mode voltage control circuit 103, a quadrature trim control circuit 104, and a sensitivity matrix detection circuit 105.

The cross-axis sensitivity tuning circuit 120 generates a first voltage V1 and a second voltage V2 for controlling a first pair of electrodes 111/112 used for z-axis motion compensation. In certain implementations, the cross-axis sensitivity tuning circuit 120 further generates a third voltage V3 and a fourth voltage V4 for controlling a second pair of electrodes 113/114 used for $k_{xy}$ compensation. For example, the first pair of electrodes 111/112 can break the path from the x-direction to the z-direction to the y-direction, thereby indirectly canceling y-direction motion arising from x-direction motion. Additionally, the second pair of electrodes 113/114 can lie in the x-y plane and used to directly cancel y-direction motion arising from x-direction motion.

In the illustrated embodiment, the cross-axis sensitivity tuning circuit 120 controls the common-mode voltage $V_{CM}$ to provide an adjustment to the resonator frequency, which can be used to avoid higher order harmonic overlap over temperature. For example, providing such a frequency adjustment can be very useful for avoiding third harmonic ($3f_0$) modal interactions. Controlling the common-mode voltage $V_{CM}$ can also be used for frequency tuning of an orthogonal mode, for applications in which such tuning is desirable.

With continuing reference to Figure 7, the self-test circuit 101 is used to generate a self-test signal on the electrodes, which can be monitored by the sensitivity matrix detection circuit 105 via a sensing structure 117 to determine how a sensitivity matrix S is changing.

In some implementations, the detected sensitivity matrix S can be used to compensate reported rate measurements (for instance, open loop). In other implementations, the self-test signal and frequency tuning via the common-mode voltage $V_{CM}$ on the electrodes can be used to keep cross-axis stiffness constant over temperature, humidity, stress, and/or other operational parameters (for instance, closed loop).

In certain implementations, one or more pairs of electrodes are used to cancel cross-axis stiffnesses, such as $k_{xz}$ (resonator-to-orthogonal) and/or $k_{yz}$ (Coriolis-to-orthogonal), and the cross-axis sensitivity which they create. The voltages used to control such electrodes can be determined by the cross-axis sensitivity tuning circuit 120 by sensing the orthogonal motion with the sensing structure 117 and tuning the cross-axis displacement to about zero (for instance, closed loop).

The cross-axis sensitivity tuning circuit 120 can dynamically control the voltages provided to the electrodes over time to compensate for variation in operating parameters. In one example, the cross-axis sensitivity tuning circuit 120 controls the electrode voltages to compensate for a cross-axis stiffness over at least one of temperature, humidity, or stress.

**Conclusion**

The foregoing description may refer to elements or features as being "connected" or "coupled" together. As used herein, unless expressly stated otherwise, "connected" means that one element/feature is directly or indirectly connected to another element/feature, and not necessarily mechanically. Likewise, unless expressly stated otherwise, "coupled" means that one element/feature is directly or indirectly coupled to another element/feature, and not necessarily mechanically. Thus, although the various schematics shown in the figures depict example arrangements of elements and components, additional intervening elements, devices, features, or components may be present in an actual embodiment (assuming that the functionality of the depicted circuits is not adversely affected).

While certain embodiments have been described, these embodiments have been presented by way of example only, and are not intended to limit the scope of the disclosure. Indeed, the novel apparatus, methods, and systems described herein may be embodied in a variety of other forms; furthermore, various omissions, substitutions and changes in the form of the methods and systems described herein may be made without departing from the spirit of the disclosure. For example, while the disclosed embodiments are presented in a given arrangement, alternative embodiments may perform similar functionalities with different components and/or circuit topologies, and some elements may be deleted, moved, added, subdivided, combined, and/or modified. Each of these elements may be implemented in a variety of different ways. Any suitable combination of the elements and acts of the various embodiments described above can be combined to provide further embodiments. Accordingly, the scope of the present invention is defined only by reference to the appended claims.

Although the claims presented here are in single dependency format for filing at the USPTO, it is to be understood that any claim may depend on any preceding claim of the same type except when that is clearly not technically feasible.

ASPECTS OF THE DISCLOSURE

Non-limiting aspects of the disclosure are set out in the following numbered clauses.

1. A microelectromechanical systems (MEMS) gyroscope comprising:

a resonator mass configured to move in a first direction;
a sensing structure configured to detect a Coriolis effect on the resonator mass in a second direction; and
a plurality of electrodes configured to control a cross-axis stiffness of the MEMS gyroscope by controlling a motion of the resonator mass in a third direction, wherein the first direction, the second direction, and the third direction are orthogonal to one another.

2. The MEMS gyroscope of Clause 1, wherein the cross-axis stiffness is between the first direction and the third direction.

3. The MEMS gyroscope of any preceding Clause, wherein the cross-axis stiffness is between the second direction and the third direction.

4. The MEMS gyroscope of any preceding Clause, wherein the plurality of electrodes includes a first electrode and a second electrode configured to receive a differential voltage, wherein the differential voltage controls a force applied to the resonator mass in the third direction.

5. The MEMS gyroscope of Clause 4, wherein a common mode voltage of the first electrode and the second electrode is adjustable to control a resonator frequency of the resonator mass.

6. The MEMS gyroscope of Clause 4 or Clause 5, wherein a common mode voltage of the first electrode and the second electrode is adjustable to control a harmonic modal interaction over temperature.

7. The MEMS gyroscope of any of Clauses 4 to 6, wherein the first electrode and the second electrode are formed in a polysilicon layer between a substrate and the resonator mass.

8. The MEMS gyroscope of any of Clauses 4 to 7, wherein the first electrode and the second electrode are formed in a cap layer over the resonator mass.

9. The MEMS gyroscope of any of Clauses 4 to 8, wherein the first electrode and the second electrode are formed in a polysilicon layer between a substrate and the resonator mass, and the plurality of electrodes further comprise a third electrode and a fourth electrode formed in a cap layer over the resonator mass.

10. The MEMS gyroscope of any of Clauses 4 to 9, wherein the first electrode and the second electrode are configured to receive a self-test signal, wherein the MEMS gyroscope further comprises a cross-axis sensitivity tuning circuit configured to detect a sensitivity matrix of the resonator mass in response to the self-test signal.

11. The MEMS gyroscope of Clause 10, wherein the cross-axis sensitivity tuning circuit is configured to compensate for a cross-axis stiffness over at least one of temperature, humidity, or stress.

12. The MEMS gyroscope of any preceding Clause, further comprising an additional plurality of electrodes configured to control a quadrature trim in the first direction and the second direction.

13. The MEMS gyroscope of any preceding Clause, implemented in at least one of a roll sensor, a pitch sensor, or a yaw sensor.

14. A method of tuning cross-axis sensitivity in a microelectromechanical systems (MEMS) gyroscope, the method comprising:

moving a resonator mass in a first direction;
detecting a Coriolis effect on the resonator mass in a second direction using a sensing structure; and
controlling a cross-axis stiffness of the MEMS gyroscope by controlling a motion of the resonator mass in a third direction using a plurality of electrodes, wherein the first direction, the second direction, and the third direction are orthogonal to one another.

15. The method of Clause 14, wherein the cross-axis stiffness is between the first direction and the third direction.

16. The method of Clause 14 or Clause 15, wherein the cross-axis stiffness is between the second direction and the third direction.

17. The method of any of Clauses 14 to 16, wherein controlling the cross-axis stiffness includes controlling a differential voltage between a first electrode and a second electrode to control a force applied to the resonator mass in the third direction.

18. The method of Clause 17, further comprising controlling a common mode voltage of the first electrode and the second electrode to control a resonator frequency of the resonator mass.

19. The method of Clause 17 or Clause 18, further comprising controlling a common mode voltage of the first electrode and the second electrode to control a harmonic modal interaction over temperature.

20. The method of any of Clauses 17 to 19, further comprising detecting a sensitivity matrix of the resonator mass in response to a self-test signal, and controlling the differential voltage based on the sensitivity matrix.


**Claims**

1. A microelectromechanical systems (MEMS) gyroscope comprising:

   a resonator mass configured to move in a first direction;
   a sensing structure configured to detect a Coriolis effect on the resonator mass in a second direction; and
   a plurality of electrodes configured to control a cross-axis stiffness of the MEMS gyroscope by controlling a motion of the resonator mass in a third direction, wherein the first direction, the second direction, and the third direction are orthogonal to one another.

2. The MEMS gyroscope of Claim 1, wherein the cross-axis stiffness is between the first direction and the third direction.

3. The MEMS gyroscope of any preceding Claim, wherein the cross-axis stiffness is between the second direction and the third direction.

4. The MEMS gyroscope of any preceding Claim, wherein the plurality of electrodes includes a first electrode and a second electrode configured to receive a differential voltage, wherein the differential voltage controls a force applied to the resonator mass in the third direction.

5. The MEMS gyroscope of Claim 4, wherein a common mode voltage of the first electrode and the second electrode is adjustable to control a resonator frequency of the resonator mass.

6. The MEMS gyroscope of Claim 4 or Claim 5, wherein a common mode voltage of the first electrode and the second electrode is adjustable to control a harmonic modal interaction over temperature.

7. The MEMS gyroscope of any of Claims 4 to 6, wherein the first electrode and the second electrode are formed in a polysilicon layer between a substrate and the resonator mass, or the first electrode and the second electrode are formed in a cap layer over the resonator mass.

8. The MEMS gyroscope of any of Claims 4 to 7, wherein the first electrode and the second electrode are formed in a polysilicon layer between a substrate and the resonator mass, and the plurality of electrodes further comprise a third electrode and a fourth electrode formed in a cap layer over the resonator mass.

9. The MEMS gyroscope of any of Claims 4 to 8, wherein the first electrode and the second electrode are configured to receive a self-test signal, wherein the MEMS gyroscope further comprises a cross-axis sensitivity tuning circuit configured to detect a sensitivity matrix of the resonator mass in response to the self-test signal, and optionally wherein the cross-axis sensitivity tuning circuit is configured to compensate for a cross-axis stiffness over at least one of temperature, humidity, or stress.

10. The MEMS gyroscope of any preceding Claim, wherein at least one of the following applies:

    (a) the MEMS gyroscope further comprises an additional plurality of electrodes configured to control a quadrature trim in the first direction and the second direction;
    (b) the MEMS gyroscope is implemented in at least one of a roll sensor, a pitch sensor, or a yaw sensor.

11. A method of tuning cross-axis sensitivity in a microelectromechanical systems (MEMS) gyroscope, the method comprising:

moving a resonator mass in a first direction;
detecting a Coriolis effect on the resonator mass in a second direction using a sensing structure; and
controlling a cross-axis stiffness of the MEMS gyroscope by controlling a motion of the resonator mass in a third direction using a plurality of electrodes, wherein the first direction, the second direction, and the third direction are orthogonal to one another.

12. The method of Claim 11, wherein the cross-axis stiffness is between the first direction and the third direction.

13. The method of Claim 11 or Claim 12, wherein the cross-axis stiffness is between the second direction and the third direction.

14. The method of any of Claims 11 to 13, wherein controlling the cross-axis stiffness includes controlling a differential voltage between a first electrode and a second electrode to control a force applied to the resonator mass in the third direction.

15. The method of Claim 14, further comprising at least one of the following:

(a) controlling a common mode voltage of the first electrode and the second electrode to control a resonator frequency of the resonator mass;
(b) controlling a common mode voltage of the first electrode and the second electrode to control a harmonic modal interaction over temperature;
(c) detecting a sensitivity matrix of the resonator mass in response to a self-test signal, and controlling the differential voltage based on the sensitivity matrix.

FIG. 1

**FIG. 2A**

**FIG. 2B**

FIG. 3A

**FIG. 3B**

EP 4 567 379 A2

47

$X_{res}$

42

Z

Y — X

d

44

P

$V_{CM} + \Delta V$

28

d

$V_{CM} - \Delta V$

d

N

27

43

d

HV 26

$k_{xz}$

**FIG. 3C**

48

Y

Z ⊙ → X

$X_{res}$

4

9

42

43

44

$X_{res}$

Z

Y ⊙ → X

$X_{res}$

42

26

→ HV

27

d

$V_{CM} - \Delta V$

43

N

$k_{xz}$

P

44

28

$V_{CM} + \Delta V$

FIG. 3D

FIG. 3E

dz=0

52

53

Substrate

51

**FIG. 4A**

52

Input X Force

dz≠0 for the Mass

53

Substrate

51

**FIG. 4B**

+Z

-Xres

+Xres

-Z

-Z

+Xres

-Xres

+Z

**FIG. 4C**

dz=0

54

55

Substrate

51

**FIG. 5A**

54

dy ≠0

dz≠0 for the Mass

55

Substrate

51

**FIG. 5B**

FIG. 5C

FIG. 6

**Cross-Axis Sensitivity Tuning**

120

101 Self-Test

102 ΔV

103 $V_{CM}$

104 Quadrature Trim

105 Sensitivity Matrix

111 N1

112 P1

V1

V2

V3

V4

N2

P2

Sensing

113

114

117

**FIG. 7**

EP 4 567 379 A2